# EUROPÄISCHE PATENTSCHRIFT

(11) **EP 2 806 080 B1**
(45) Veröffentlichungstag und Bekanntmachung des Hinweises auf die Patenterteilung: **23.03.2016**
(21) Anmeldenummer: 14169347.3
(22) Anmeldetag: 21.05.2014
(51) Int. Cl.: E04D 13/03, E04G 21/32, F16F 7/12

(54) **Durchsturzsicherung für Lichtkuppeln und Ähnliches**
Fall through protection for skylights and the like
Sécurité anti-chute pour coupoles et analogues

(30) Priorität: 22.05.2013 AT 503462013
(43) Veröffentlichungstag der Anmeldung: 26.11.2014
(73) Patentinhaber: Linhart, Werner, 2230 Gänserndorf (AT); Buchegger, Walter, 3380 Pöchlarn (AT)
(72) Erfinder: Linhart, Werner, 2230 Gänserndorf (AT); Buchegger, Walter, 3380 Pöchlarn (AT)
(74) Vertreter: Patentanwälte Barger, Piso & Partner

(56) Entgegenhaltungen:
- WO-A2-2012/177675
- DE-A1- 3 842 791
- US-A- 3 222 739
- US-A1- 2002 020 584
- US-A1- 2008 136 224

## Beschreibung

Die Erfindung betrifft eine Durchsturzsicherung für Lichtkuppeln, Lichtschächte, Dachluken, Dachfenster und Ähnliches, aufweisend ein Fangnetz, das an Halterungen befestigt ist. Diese Halterungen können im Falle der Belastung des Fangnetzes durch Deformation die Aufprallenergie zumindest teilweise abarbeiten, entsprechend dem einleitenden Teil des Anspruches 1 und dem DE 20 2006 015 087 U1.

Die genannte Gebrauchsmusterschrift betrifft einen sogenannten Falldämpfer, der aus einer länglichen Platte gebildet ist, die an ihrem einen Ende zwei Aufnahmen für Seile oder dergleichen aufweist. Eines der Seile ist dabei mit einem festen, sicheren Punkt verbunden, am anderen Seil hängt der zu sichernde Gegenstand bzw. die zu sichernde Person. Beim Auftreten einer Last reißt der Falldämpfer zwischen den beiden Befestigungspunkten, entlang einer Sollbruchstelle auf, und der Abstand zwischen den zwei Befestigungspunkten vergrößert sich entsprechend. Durch die Gefügezerstörung im Bereich der Sollbruchstelle und die Deformation des Falldämpfers, der dabei deutlich in die Länge gezogen wird, wird die Aufprallenergie bzw. Fallenergie zumindest im Wesentlichen abgearbeitet.

Das Abarbeiten kinetischer Energie durch plastische Deformation eines passend gewählten Gegenstandes ist an sich bekannt, es wird dazu auch auf die DE 14 80 372 auf dem Gebiet der Sicherheitsgurte für Fahrzeuginsassen verwiesen.

Die eingangs genannte Anordnung erfüllt in der Theorie ihren Zweck, ist aber nur für bestimmte Anwendungsgebiete geeignet. So hängt die aufgenommene bzw. abgearbeitete Energie ganz wesentlich von der herrschenden Temperatur ab, und, speziell über längere Zeiträume, auch von der Geschichte des Temperaturverlaufs. Es ist bekannt, dass es dabei zu Versprödungen kommt, es sei nur an die katastrophalen Unfälle mit versprödeten Leitblanken aus Aluminium erinnert. Auch kommt es zu Korrosion, wodurch die Charakteristiken derartiger Vorrichtungen ebenfalls nachhaltig verändert werden. Schlussendlich besteht bei diesen Vorrichtungen auch die große Gefahr, dass nach Erreichen des als Endzustand gedachten Deformationsbildes, die Vorrichtung zufolge der dynamischen Einflüsse versagt, die Sollbruchstelle über den vorgesehenen Bereich hinaus weiter bricht und die Platte schließlich reißt.

US 2002/020584 offenbart eine Durchsturzsicherung mit einem Fangnetz und eines Halterung in Form einer Platte, wobei die Platte einen Schlitz aufweist.

Es besteht demnach ein Bedarf an einer derartigen Bremsvorrichtung, die die genannten Nachteile nicht aufweist.

Es ist die Aufgabe der Erfindung eine derartige Vorrichtung zu schaffen; diese soll nicht nur über lange Zeiträume zuverlässig bleiben und ihre Charakteristik praktisch unverändert aufrecht erhalten, sie soll auch einfach anzuwenden und kostengünstig herzustellen und anzuwenden sein.

Erfindungsgemäß werden diese Ziele durch die im kennzeichnenden Teil des Anspruches 1 angegebenen Merkmale erreicht, mit anderen Worten dadurch, dass die Vorrichtung, bzw. Halterung aus einer im Wesentlichen trapezförmiger Platte besteht, deren Höhe bevorzugt wesentlich größer ist als die Länge der zueinander parallelen Seiten, und die im Bereich ihrer längeren parallelen Seite, der Basis, einen verbreiteten Verlängerungsbereich aufweist, in dem zumindest ein Bremsschlitz vorgesehen ist, der bevorzugt parallel zur Basis verläuft.

Vor der Benutzung wird der schmale Bereich des Trapezes, der bevorzugt über den Scheitel hinaus über eine Verankerungsverlängerung verfügt, deren Breite nicht über die des Scheitels geht, durch den Schlitz geschoben, sodass eine Schlaufe, bzw. Umschlingung entsteht. In diese wird, je nach Ausführungsform, vor oder nach dem Umschlagen ein Haltesteg eingelegt bzw. eingeschoben, der mit dem zu sichernden Gegenstand verbunden ist; der dünne Bereich des Trapez bzw. dessen Verlängerung, wird am Festpunkt fixiert; der Schlitz weist eine Länge auf, die der Breite des Trapezes an seiner Schmalseite, dem Scheitel, entspricht, und ist daher dort formschlüssig fixiert.

Im Einsatzfall wird durch die wirkenden Zugkräfte die Schlaufe des Trapezes in die Länge gezogen, das heißt, der Schlitz wird über immer breitere Bereiche des Trapezes gezogen und die dabei auftretende Reibung, Deformation und Materialabtrennung durch die auftretenden Scher- und Schneidvorgänge arbeiten die Energie hervorragend ab.

In einer Ausgestaltung mit zwei zueinander parallelen Schlitzen wird die Lasche besser geführt und Energievernichtung durch die Schnittvorgänge bzw. die spanabhebenden Vorgänge vergrößert.

In einer anderen Ausgestaltung, die auch mit der ersten kombiniert werden kann, verlaufen die seitlichen Schenkel des Trapezes nicht geradlinig, sondern sind konkav oder konvex gebogen ausgebildet. Im ersteren Fall, ist die Wirkung der Bremse progressiv; bei konvexer Ausführung ist die Bremswirkung degressiv, nimmt also mit fortschreitendem Einzug ab.

Die Erfindung wird im Folgenden anhand der Zeichnung näher erläutert. Dabei zeigt bzw. zeigen
die Figur 1 eine Draufsicht auf eine erfindungsgemäße Bremse,
die Figur 2, das ineinander Stecken der Enden des Trapezes,
die Figur 3 die Änderungen beim Bremsvorgang,
die Figur 4, ähnlich der Figur 1, eine Bremse mit zwei Schlitzen,
die Figura 5 und 6, ähnlich den Figura 2 und 3, die Situation beim ineinander Stecken und beim Bremsvorgang und
die Figur 7, in schematischer perspektivischer Ansicht, die Situation am Ende eines Bremsvorganges, der die Bremse bis zum Anschlag beansprucht hat.

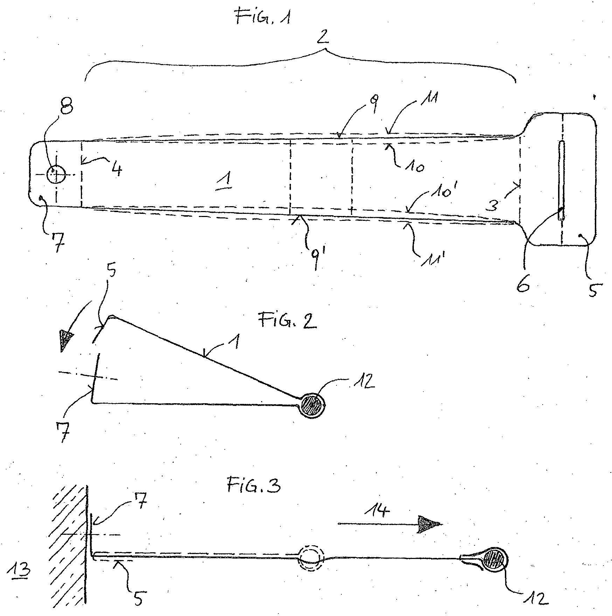

In Fig.1 ist eine erfindungsgemäße Platte 1 in ihrer Ausgangslage dargestellt. Die Platte weist im Wesentlichen einen trapezartigen Bereich 2 auf, der von der Basis 3 bis zum Scheitel 4 reicht Anschließend an die Basis 3 ist ein verbreiteter Schlitzteil 5 mit einem Bremsschlitz 6 vorgesehen; an den Scheitel 4 anschließend ist ein schmales Ende der Platte oder Befestigungsteil 7 ausgebildet, im dargestellten Ausführungsbeispiel mit einer Befestigungsöffnung 8. Die Seitenkanten des Trapezes werden von dessen Schenkeln 9, 9' gebildet, die Abweichung ihrer Lage vom Rechten Winkel ist für die Bremswirkung mitbestimmend und ermöglicht verschiedene Varianten:

Innerhalb der Trapezform (dargestellt durch die Linien 9 und 9') sind die zur Gänze innerhalb des Trapezes 1 verlaufende strichlierte Linien 10, 10' eingezeichnet die, ausgehend vom Scheitel 4 einen etwa konkaven Zuschnitt des Bereiches 2 bilden.

Umgekehrt dazu bilden die Linien 11, 11', einen etwa konvexe Form diese schließen mit dem Scheitel 4 einen größeren Winkel ein als die Schenkel 9, 9' dafür sind ihre entsprechenden Winkel im Bereich der Basis 3 kleiner als die der Schenkel 9, 9'.

Diese beiden strichlierten Linien, die innere Linie 10, 10' und die äußere Linie 11, 11' sind Beispiele für andere Ausbildungen des Trapezes, wobei in diesem Fall die Schenkel des Trapezes, wenn sie die abgewandelten Formen 10, 10'; 11, 11' aufweisen, nicht mehr geradlinig verlaufen, sondern gebogen oder abgewinkelt sind. In der Praxis weist eine Ausführungsform mit Schenkeln 10, 10' eine progressive Bremswirkung auf, die Variante mit den Schenkeln 11, 11' eine degressive Bremswirkung.

Die Fig. 2 zeigt, wie eine erfindungsgemäß ausgebildete Platte 1 um einen Stab 12 gebogen wird und dabei der Befestigungsteil 7 durch den Bremsschlitz 6 gesteckt wird, wodurch die Umschlingung entsteht, in der der Stab 12 liegt. Anschließend daran wird der Überstand des verbreiteten Teils 5 zur Herstellung einer sicheren Verbindung weiter abgebogen, bis er im Bereich des Bremsschlitzes 6 eine Biegung von 180° aufweist. Da der Befestigungsteil 7 passend mit einer festen Struktur 13 verbunden ist, ist jedwedes Herausgleiten aus der Schlinge unmöglich.

Die Fig. 3 zeigt die Situation im Befestigungszustand in strichlierten Linien und im Brems- bzw. Anwendungsfall in ausgezogenen Linien, der Pfeil 14 zeigt die Bewegungsrichtung der Stange bzw. des Stabs 12 während des Durchlaufens des Bremsweges. Aus Gründen der Übersichtlichkeit wurde die übliche Deformation im Bereich des Befestigungsteils 7 nach unten nicht eingezeichnet, es handelt sich hier um eine Prinzipdarstellung, aus der die Verlängerung der Haltevorrichtung ersichtlich werden soll und auch, dass die Umschlingung um den Stab 12 über etwa die Hälfte der Länge der Platte 1 wandert, eine Formänderung, die mit großer Arbeit verbunden ist und in der ebenfalls viel Energie abgebaut wird.

Wie aus der Draufsicht der Fig. 1 im Zusammenhang mit der Fig. 3 zu entnehmen ist, reibt der Bremsschlitz 6 mit seinen beiden Schlitzgründen (den Enden, die geradlinig oder gebogen ausgebildet sein können), bei dieser Bewegung an den seitlichen Kanten bzw. Schenkeln 9, 9', (bzw. 11, 11'; 10, 10'), wodurch ebenfalls viel Energie abgebaut wird. Insbesondere diese stauchende, schneidende, schabende Tätigkeit ist völlig unabhängig von der Geschichte der Bremse, solange sie nicht bereits einmal benutzt worden ist. Dies ist insbesondere bei der Verwendung bei Dachfenstern, Dachluken, Glasdächern, Lichtschächten, Lichtkuppeln etc. notwendig, da dort ein Austausch nur in extrem großen zeitlichen Abständen möglich ist und sich insbesondere die Temperaturbedingungen einerseits in großen Bereichen, andererseits mit hoher Frequenz, ändern können.

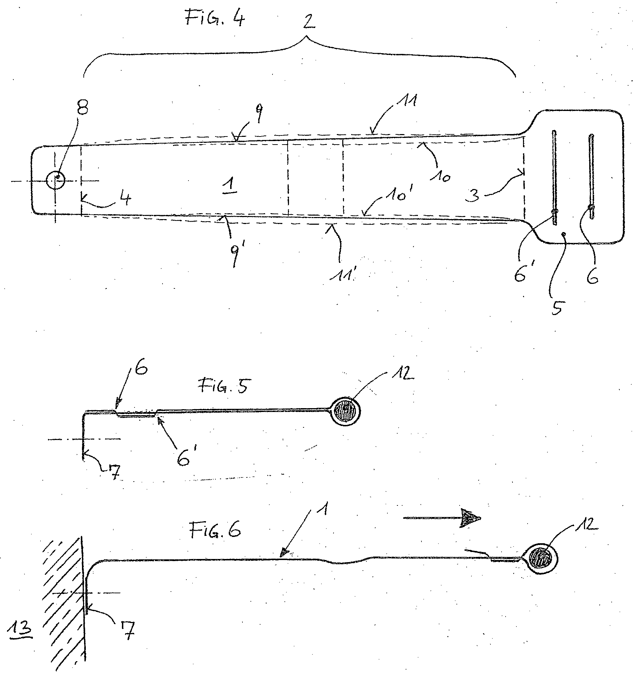

Die Figura 4 bis 7 stellen eine Variante dar, bei der gleiche Teile mit gleichen Bezugszeichen wie in den Figura 1 bis 3 versehen sind. Der Hauptunterschied zwischen den beiden Varianten besteht darin, dass der eigentliche Bremsschlitz 6 hier einen größeren Abstand zur Basis 3 aufweist als im ersten Fall, und dass zwischen der Basis 3 und dem Bremsschlitz 6 ein Führungsschlitz 6' vorgesehen ist, dessen Länge größer ist als die Länge des Bremsschlitzes 6; bevorzugt entspricht er der Länge der Basis 3 oder geht noch knapp darüber hinaus.

Der Sinn des Führungsschlitzes 6' besteht darin, dass er sicherstellt, dass auch bei ungleichmäßiger Belastung am Stab 12 der Bremsschlitz 6 so geführt wird, dass beide Enden des Schlitzes in jeweils ihren Schenkel 9, 9' (10, 10'; 11, 11') einschneiden und es so zu keiner einseitigen Belastung der Platte 1 und damit unter Umständen zu einer Beschädigung oder einem Versagen kommt.

Die Figura 5 und 6 entsprechen den Figura 2 und 3 und benötigen hier keiner weiteren Erläuterung.

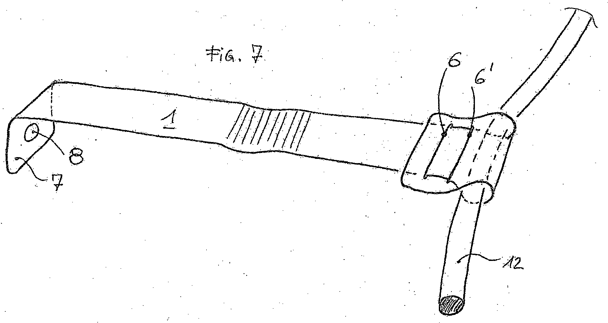

Hingewiesen werden soll nur darauf, dass in Figur 7 auch der Stab 12 deformiert dargestellt ist, wie es in Realität allgemein der Fall sein wird, doch ist auch hier darauf verzichtet worden, das Trapez 1 deutlich nach unten zu klappen, da es sich nur um ein Symbolbild handelt.

Als Material für die Platte 1 kann sowohl dünnes Metallblech, vorzugsweise nichtrostender Stahl, als auch ausreichend dauerhafte und reißfeste Textilfaser- oder Kunststoffmaterialien zum Einsatz kommen. Zum Schutz gegen Umwelteinflüsse oder Beschädigung sind beschichtete oder ummantelte Ausführungen möglich.

Ausgestaltungen der Erfindung sind dem Fachmann in Kenntnis der Erfindung ein Leichtes, so kann zur Erhöhung der Sicherheit gegen Einreißen des Bremsschlitzes 6 in diesen Bereich eine Verdoppelung durch Umschlagen des Befestigungsteils 7, der dann einen weiteren Schlitz aufweist, ausgebildet werden, es kann auch ein Verstärkungsteil aufgelötet, aufgeschweißt, aufgeklebt oder auch durch mehrer Nieten oder dergleichen befestigt, vorgesehen sein.

Der Bremsschlitz muss nicht parallel zur Basis verlaufen, er kann auch gekrümmt oder abgewinkelt sein, auch dann wieder bevorzugt symmetrisch zur Symmetrieebene der gesamten Vorrichtung.

Eine mit der dargestellten und erläuterten Funktionsweise gleiche Funktionsweise, die in manchen Anwendungsfällen trotz eines komplexeren Aufbaus vorteilhaft sein kann, besteht darin, die Dicke der Platte 1 vom Scheitel 4 zur Basis 3 hin ansteigen zu lassen, und die Bremsung durch entsprechendes Reiben, Schaben, Schneiden des Bremsschlitzes 6 über seine ganze Länge hinweg und nicht nur (oder nicht mehr) über seine beiden Enden, zu bewirken.

Als weitere Variante ist es, beispielsweise durch geeignete Walzvorgänge, auch möglich, die Dicke der Platte 1 entlang von Schnitten, die parallel zum Scheitel 4 bzw. zur Basis 3 verlaufen, unterschiedlich zu gestalten, somit mit schmalen Bereichen entlang der Schenkel 9, 9' (10, 10'; 11, 11') und einer größten Dicke im Bereich der Symmetrieachse.

Selbstverständlich sind Kombinationen all dieser Maßnahmen möglich, vom Fachmann sind diese in Kenntnis der Erfindung und des jeweiligen Anwendungsgebietes leicht auswählbar und in ihrem Ausmaß bzw. ihren Abmessungen bestimmbar.

## Patentansprüche

1. Durchsturzsicherung für Lichtkuppeln, Lichtschächte, Dachluken, Dachfenster und ähnliches, aufweisend ein Fangnetz, das an Halterungen befestigt ist, **dadurch gekennzeichnet, dass** zumindest eine Halterung aus einer im Wesentlichen trapezförmiger Platte (1) besteht, deren Höhe und deren Schenkel (9, 9') bevorzugt wesentlich größer sind als die Länge der zueinander parallelen Seiten (3, 4), und dass im Bereich ihrer längeren parallelen Seite, der Basis (3), ein verbreiteter Verlängerungsbereich (5) vorgesehen ist, in dem zumindest ein Bremsschlitz (6) vorgesehen ist, in den das schmale Ende (7) der Platte (1) eingesteckt und unter Bildung einer Umschlingung umgeschlagen ist.

2. Durchsturzsicherung nach Anspruch 1, **dadurch gekennzeichnet, dass** ein Teil (12), der mit dem Fangnetz in Verbindung steht, in der Umschlingung liegt.

3. Durchsturzsicherung nach Anspruch 1 oder 2, **dadurch gekennzeichnet, dass** der Bremsschlitz (6) parallel zur Basis (3) verläuft.

4. Durchsturzsicherung nach einem der Ansprüche 1 bis 3, **dadurch gekennzeichnet, dass** im schmalen Ende (7) der Platte (1) eine Befestigungsvorrichtung, bevorzugt eine Befestigungsöffnung (8), vorgesehen ist.

5. Durchsturzsicherung nach einem der Ansprüche 1 bis 4, **dadurch gekennzeichnet, dass** in Draufsicht auf die Platte (1) deren Schenkel (9, 9') gekrümmt verlaufen.

6. Durchsturzsicherung nach Anspruch 5, **dadurch gekennzeichnet, dass** in Draufsicht auf die Platte (1) deren Schenkel (9, 9') konkav verlaufen.

7. Durchsturzsicherung nach einem der voranstehenden Ansprüche, **dadurch gekennzeichnet, dass**, dem Bremsschlitz (6) benachbart, ein zu ihm paralleler Führungsschlitz (6') vorgesehen ist, durch den das schmale Ende (7) der Platte (1) gesteckt wird, bevor es durch den Bremsschlitz (6) gesteckt wird.

8. Durchsturzsicherung nach Anspruch 7, **dadurch gekennzeichnet, dass** der Führungsschlitz (6') länger ist als der Bremsschlitz (6), aber nicht länger als die Basis (3).

9. Durchsturzsicherung nach einem der voranstehenden Ansprüche, **dadurch gekennzeichnet, dass** die Breite der kurzen parallelen Seite (4) und des Bremsschlitzes (6), bevorzugt auch die Breite des schmalen Endes (7), gleich groß sind.

10. Durchsturzsicherung nach einem der voranstehenden Ansprüche, **dadurch gekennzeichnet, dass** die Platte (1) ein dünnes Metallblech, vorzugsweise aus nichtrostendem Stahl, ist.

11. Durchsturzsicherung nach einem der Ansprüche 1 bis 9, **dadurch gekennzeichnet, dass** die Platte (1) aus Textilfasermaterialien oder Kunststoffmaterialien besteht.

## Claims

1. Fall-through protection for skylights, light shafts, roof hatches, roof windows and the like, having a safety net which is fastened to holders, **characterised in that** at least one holder consists of a fundamentally trapezoidal plate (1), the height and arms (9, 9') of which are preferably substantially larger than the length of the sides (3,4) that are parallel to each other, and a widened elongation region (5) is provided in the region of its longer parallel sides, the base (3), in which elongation region at least one brake slot (6) is provided, into which the narrow end (7) of the plate (1) is inserted and is enclosed by the formation of a clinch.

2. Fall-through protection according to claim 1, **characterised in that** a part (12) which is in connection with the safety net is located in the clinch.

3. Fall-through protection according to claim 1 or 2, **characterised in that** the brake slot (6) runs parallel to the base (3).

4. Fall-through protection according to one of claims 1 to 3, **characterised in that** a fastening device, preferably a fastening opening (8), is provided in the narrow end (7) of the plate (1).

5. Fall-through protection according to one of claims 1 to 4, **characterised in that**, in a top view of the plate (1), its arms (9, 9') run in a curved manner.

6. Fall-through protection according to claim 5, **characterised in that**, in a top view of the plate (1), its arms (9, 9') run concavely.

7. Fall-through protection according to one of the preceding claims, **characterised in that**, adjacent to the brake slot (6), a guide slot (6') parallel thereto is provided, through which the narrow end (7) of the plate (1) is inserted before it is inserted through the brake slot (6).

8. Fall-through protection according to claim 7, **characterised in that** the guide slot (6') is longer than the brake slot (6), but not longer than the base (3).

9. Fall-through protection according to one of the preceding claims, **characterised in that** the width of the short parallel side (4) and the brake slot (6), preferably the width of the narrow end (7) as well, are of equal size.

10. Fall-through protection according to one of the preceding claims, **characterised in that** the plate (1) is a thin metal sheet, preferably made from stainless steel.

11. Fall-through protection according to one of claims 1 to 9, **characterised in that** the plate (1) consists of textile fibre materials or plastic materials.

## Revendications

1. Protection ou sécurité antichute pour des coupoles de lumière, des puits de lumière, des lucarnes ou tabatières, des fenêtres de toit et éléments similaires, comprenant un filet récupérateur de sécurité, qui est fixé à des éléments de retenue, **caractérisée en ce qu'**au moins un élément de retenue est constitué par une plaque (1) sensiblement en forme de trapèze, dont la hauteur et les côtés latéraux (9, 9') sont sensiblement plus grands que la longueur des côtés (3, 4) mutuellement parallèles, et **en ce que** dans la zone de son côté parallèle le plus long, à savoir la base (3), il est prévu une zone de prolongement élargie (5) dans laquelle est prévue au moins une fente de freinage (6) dans laquelle est engagée l'extrémité étroite (7) de la plaque (1), avant d'être rabattue en formant une boucle d'enlacement.

2. Protection antichute selon la revendication 1, **caractérisée en ce qu'**une pièce (12), qui est en liaison avec le filet récupérateur de sécurité, est placée dans la boucle d'enlacement.

3. Protection antichute selon la revendication 1 ou la revendication 2, **caractérisée en ce que** la fente de freinage (6) s'étend parallèlement à la base (3).

4. Protection antichute selon l'une des revendications 1 à 3, **caractérisée en ce que** dans l'extrémité étroite (7) de la plaque (1) il est prévu un dispositif de fixation, de préférence une ouverture de fixation (8).

5. Protection antichute selon l'une des revendications 1 à 4, **caractérisée en ce qu'**en vue de dessus sur la plaque (1), ses côtés latéraux (9, 9') s'étendent de manière courbe.

6. Protection antichute selon la revendication 5, **caractérisée en ce qu'**en vue de dessus sur la plaque (1), ses côté latéraux (9, 9') s'étendent de manière concave.

7. Protection antichute selon l'une des revendications précédentes, **caractérisée en ce qu'**au voisinage de la fente de freinage (6), il est prévu parallèlement à celle-ci, une fente de guidage (6') à travers laquelle on engage l'extrémité étroite (7) de la plaque (1), avant de l'engager à travers la fente de freinage (6).

8. Protection antichute selon la revendication 7, **caractérisée en ce que** la fente de guidage (6') est plus longue que la fente de freinage (6), mais pas plus longue que la base (3).

9. Protection antichute selon l'une des revendications précédentes, **caractérisée en ce que** la largeur du côté parallèle court (4) et de la fente de freinage (6), de préférence également la largeur de l'extrémité étroite (7), sont de même grandeur.

10. Protection antichute selon l'une des revendications précédentes, **caractérisée en ce que** la plaque (1) est une tôle métallique mince, de préférence en acier inoxydable.

11. Protection antichute selon l'une des revendications 1 à 9, **caractérisée en ce que** la plaque (1) est constituée de matériaux à fibres textiles ou de matériaux du type matière plastique.
